# EUROPÄISCHE PATENTANMELDUNG

(11) **EP 2 157 133 A1**
(43) Veröffentlichungstag der Anmeldung: **24.02.2010**
(21) Anmeldenummer: 08400040.5
(22) Anmeldetag: 19.08.2008
(51) Int. Cl.: C08L 69/00, C08K 3/30, C08K 5/42, C08J 5/22, C08K 13/02

(54) **Folien mit verbesserten Eigenschaften**

(71) Anmelder: Bayer MaterialScience AG, 51368 Leverkusen (DE)
(72) Erfinder: Dr. Heinz Pudleiner, 47800 Krefeld (DE); Dr. Klaus Meyer, 41539 Dormagen (DE); Joerg Nickel, 41539 Damagen (DE); Hans Braun, 21150 Rayong (DE)

(57) **Zusammenfassung**

Die Erfindung betrifft Folien mit guten Gleitreibungseigenschaften und Glanzwerten bestehend aus einer Kunststoffzusammensetzung enthaltend 96 bis 99,499 Gew.-% eines transparenten Polycarbonats und 0,001 bis 4 Gew.-% quartäre Ammoniumsalze von Perfluoralkylsulfonsäuren als Gleitmittel-Additiv und 0,5 bis 29.999 Gew.-%, Bariumsulfat, wobei sich die genannten Bestandteile jeweils zu 100 Gew.-% ergänzen. Die Folien zeigen verbesserte Eigenschaften in der Verarbeitung. Die Erfindung betrifft weiterhin aus diesen Folien erzeugte Formteile.

## Beschreibung

Die vorliegende Erfindung betrifft Folien, die gute Gleitreibungs- und Antistatikeigenschaften und gleichzeitig hervorragende Glanzwerte aufweisen. Darüber hinaus zeigen die erfindungsgemäßen Folien verbesserte Eigenschaften in der Verarbeitung.

Folien werden für viele Anwendungen zugeschnitten und als Blätter und Bahnen weiter verarbeitet. Dies geschieht zum Beispiel beim Bedrucken oder Laminieren der Folien. Hierbei werden die Folien auf Maß geschnitten und müssen für den anschließenden Verarbeitungsschritt blattweise vereinzelt werden. Unter Anderem durch elektrostatische Aufladung und zusätzlich durch den so genannten "Wet-Out-Effekt" ergeben sich hierbei nicht unerhebliche Probleme. Die Folienzuschnitte neigen zum Beispiel zum Aneinanderhaften, was zu Störungen im Produktionsablauf führt. Der Effekt des Aneinanderhaftens der Folien bei der Verarbeitung wird auch als "Blocken" bezeichnet.

In den meisten Verwendungen der Folien und Folien-Herstellungsverfahren ist es daher wesentlich, dass die Folien gute Antistatikeigenschaften und darüber hinaus gute Gleitreibungseigenschaften aufweisen, dass heißt einen möglichst niedrigen Gleitreibungskoeffizienten besitzen, um das Blocken zu vermeiden.

Thermoplastische Kunststoffe werden zum Beispiel im großen Umfang zu Verpackungszwecken eingesetzt. Für bestimmte Anwendungen ist es daher außerdem erforderlich, dass die Folien zusätzlich hohe Glanzwerte zeigen.

In der EP 0 862 594 B1 ist eine Trennfolie aus einem Substrat aus einem folienbildenden polymeren Material beispielsweise aus einem Polycarbonat beschrieben, auf das eine Trennzusammensetzung aufgebracht wird. Die Trennzusammensetzung enthält eine Mischung aus einem härtbaren Silikonharz und einem härtbaren Polyurethanharz.

Aus der GB 1 398 359 sind Beschichtungen bekannt, die als Additive Celluloseester oder ein Silikon-Öl enthalten. Die Aufbringung solcher Beschichtungen auf Folien bedeutet einen zusätzlichen Verarbeitungsschritt und ist daher kostenintensiv. Additive wie Silikon-Öle verändern außerdem die Oberflächeneigenschaften derart, dass ein störungsfreies Bedrucken der Folien nicht mehr gewährleistet werden kann.

In der Patentschrift US 3,424,703 werden Polycarbonatfolien mit niedrigem Gleitreibungskoeffizienten beschrieben. Diese Polycarbonate enthalten als Gleitmittel anorganische Talkum- oder Silica Partikel, die als "Abstandshalter" zwischen den Folienblättern wirken können. Diese Teilchen verhindern zwar den "Wet-out-Effekt", zeigen jedoch keine Wirksamkeit gegen die elektrostatische Aufladung.

In der EP 1 232 206 werden quartäre Ammonium-Salze als antistatische Zusammensetzungen beschrieben. Diese führen jedoch in Polycarbonaten zu einer deutlichen Gelbfärbung bei der Verarbeitung, was insbesondere für transparente und weiß eingefärbte Einstellungen von polymeren Formkörpern und Extrudaten unerwünscht ist.

Quartäre Ammoniumsalze von Perfluoralkylsulfonsäuren und deren Verwendung als Additive für Thermoplaste sind bekannt. So werden in der DE 2 506 726 werden quartäre Ammoniumsalze von Perfluoralkylsulfonsäuren als Entformungsmittel für Polycarbonate beschrieben. In der DE 100 19 416 A1 werden spezielle Perfluoralkylsulfonsäureammoniumsalze als Antistatika in thermoplastischen Formmassen eingesetzt.

Die verschiedenen Anwendungsgebiete stellen an die Verarbeitbarkeit und weiteren Eigenschaften der Folien hohe Ansprüche. Es hat sich gezeigt, dass die bisher bekannten Antiblockmittel oder Antiblockmittelzusammensetzungen nachteilige Auswirkungen auf andere Folieneigenschaften haben können. So werden insbesondere Transparenz und Glanz der Folien durch Gleitmittel oder die Additiv-Zusammensetzungen beeinträchtigt.

Der Erfindung liegt daher die Aufgabe zu Grunde Folien bereitzustellen, die sich sowohl bei glatt als auch bei strukturiert gefertigten Oberflächen problemlos gegeneinander verschieben und vereinzeln lassen und gleichzeitig gute Glanzwerte aufweisen und mit denen das Problem der Vereinzelung von Folienblättern vermieden werden kann.

Diese Aufgabe wird erfindungsgemäß durch eine Folie gemäß Anspruch 1 gelöst, die aus einer Kunststoffzusammensetzung besteht, die 70,000 bis 99,499 Gew.-% eines transparenten Polycarbonats und 0,001 bis 4,000 Gew.-% quartäre Ammoniumsalze von Perfluoralkylsulfonsäuren als Gleitmittel-Additiv und 0,500 bis 29,999 Gew.-% Bariumsulfat enthält, wobei sich die genannten Bestandteile jeweils zu 100 Gew.-% ergänzen.

Das eingesetzte Bariumsulfat hat eine mittlere Teilchengröße von 0,5 bis 10 µm, bevorzugt von 1 bis 5 µm.

Es wurde überraschend gefunden, Kunststoffzusammensetzungen, die 70,000 bis 99,499 Gew.-% eines transparenten Polycarbonats, 0,001 bis 4,000 Gew.-% quartäre Ammoniumsalze von Perfluoralkylsulfonsäuren als internes Gleitmittel-Additiv und 0,500 bis 29,999 Gew.-% Bariumsulfat enthalten besonders gut zur Herstellung solcher Folien eignen. Die erfindungsgemäßen Folien lassen sich problemlos sowohl bei glatten als auch strukturierten Oberflächen gegeneinander verschieben und vereinzeln. Die Folien zeigen ein gute Gleitreibungs- und Antistatikeigenschaften Darüber hinaus weisen sie hervorragende Glanzwerte auf. Eine zusätzliche Beschichtung, die einen zusätzlichen Verfahrensschritt bedeuten würde, ist nicht notwendig.

Die erfindungsgemäßen Folien können bevorzugt Reibungskoeffizienten kleiner 0,3 bei glatter Oberfläche, das heißt bei einer Rauhigkeit (Rz nach ISO 4288) kleiner 100 nm, gemessen nach ASTM D 1894-06, und kleiner 0,25 bei Rauhigkeit (Rz nach ISO 4288) größer 5 µm, gemessen nach ASTM D 1894-06, aufweisen. Hierbei sind die Reibungskoeffizienten an jeweils gleichen Oberflächen der Folien gemeint.

Geeignete Polycarbonate für die Herstellung der erfindungsgemäßen Folien sind alle bekannten Polycarbonate. Dies sind Homopolycarbonate, Copolycarbonate und thermoplastische Polyestercarbonate.

Bevorzugt haben die Polycarbonate ein gewichtsgemitteltes Molekulargewicht M̅w von 18.000 bis 40.000, vorzugsweise von 26.000 bis 36.000 und besonders bevorzugt von 28.000 bis 35.000, ermittelt durch Messung der relativen Lösungsviskosität in einem Ubbelohde Viskosimeter bei 25°C in Dichlormethan oder in Mischungen gleicher Gewichtsmengen Phenol/o-Dichlorbenzol geeicht durch Lichtstreuung.

Die Herstellung der Polycarbonate kann nach bekannten Methoden, beispielsweise nach dem Phasengrenzflächenverfahren oder dem Schmelzumesterungsverfahren, erfolgen.

Die Herstellung der Polycarbonate nach dem Phasengrenzflächenverfahren ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. Vm, S. 325, auf Dres. U. Grigo, K. Kircher und P. R- Müller "Polycarbonate" in BeckerBraun, Kunststoff-Handbuch, Band 3/1, Polycarbonate, Polyacetale, Polyester, Celluloseester, Carl Hanser Verlag München, Wien 1992, S. 118-145 sowie auf die Patentschrift EP 0 517 044 A verwiesen.

Daneben ist die Herstellung von Polycarbonaten auch aus Diarylcarbonaten und Diphenolen nach dem bekannten Polycarbonatverfahren in der Schmelze, dem so genannten Schmelzumesterungsverfahren, möglich, das z.B. in WO-A 01/05866 und WO-A 01/05867 beschrieben ist. Daneben werden Umesterungsverfahren (Acetatverfahren und Phenylesterverfahren) beispielsweise in den US-A 3,494,885; US 4,386,186; US 4,661,580; US 4,680,371 und US 4,680,372, sowie in der EP-A 26 120, EP-A 26 121, EP-A 26 684, EP-A 28 030, EP-A 39 845, EP-A 91 602, EP-A 97 970, EP-A 79 075, EP-A 14 68 87, EP-A 15 61 03, EP-A 23 49 13 und EP-A 24 03 01 sowie in der DE-A 14 95 626 beschrieben.

Geeignete Diphenole sind z.B. in den US-A -PS 2,999,835; 3,148,172; 2,991,273; 3,271,367; 4,982,014 und 2,999,846; in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff, und in "D.G. Legrand, J.T. Bendler, Handbook of Polycarbonate Science and Technology, Marcel Dekker New York 2000, S. 72ff." beschrieben

Es können erfindungsgemäß sowohl Homopolycarbonate als auch Copolycarbonate eingesetzt werden. Zur Herstellung Copolycarbonate können erfindungsgemäß als eine Komponente auch 1 bis 25 Gew.-%, vorzugsweise 2,5 bis 25 Gew.-% (bezogen auf die Gesamtmenge an einzusetzenden Diphenolen), Polydiorganosiloxane mit Hydroxy-aryloxy-Endgruppen eingesetzt werden. Diese sind beispielsweise aus der US-Patentschrift US 3,419,634 bekannt oder nach literaturbekannten Verfahren herstellbar. Die Herstellung Polydiorganosiloxanhaltiger Copolycarbonate wird beispielsweise in der Offenlegungsschrift DE 33 34 782 A beschrieben.

Ferner können erfindungsgemäß Polyestercarbonate und Block-Copolyestercarbonate verwendet werden, wie sie beispielsweise in der WO 2000/26275 beschrieben sind. Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Die aromatischen Polyestercarbonate können sowohl linear als auch in bekannter Weise verzweigt sein, wie beispielsweise in der DE 29 40 024 A und DE 30 07 934 A beschrieben.

In einer erfindungsgemäß bevorzugten Ausführungsform können als Gleitmittel-Additiv ein oder mehrere quartäre Ammoniumsalze einer Perfluoralkylsulfonsäure der Formel (I)

R-S0₃ NR' R" R''' R'''' (I)

eingesetzt werden, in welcher
- R: perfluorierte cyclische oder lineare, verzweigte oder unverzweigte Kohlenstoffketten mit 1 bis 30 Kohlenstoffatomen, bevorzugt 4 bis 8 Kohlenstoffatomen, im Falle der cyclischen Reste bevorzugt solche mit 5 bis 7 Kohlenstoffatomen;
- R': unsubstituierte oder durch Halogen, Hydroxy, Cycloalkyl oder Alkyl, insbesondere durch C₁ bis C₃-Alkyl oder C₅-C₇-Cycloalkyl, substituierte, cyclische oder lineare, verzweigte oder unverzweigte Kohlenstofflcetten mit 1 bis 30 Kohlenstoffatomen, bevorzugt 3 bis 10 Kohlenstoffatomen, im Falle cyclischer Reste bevorzugt solche mit 5 bis 7 Kohlenstoffatomen, besonders bevorzugt Propyl, 1-Butyl, 1-Pentyl, Hexyl, Isopropyl, Isobutyl, tert-Butyl, Neopentyl, 2-Pentyl, Iso-Pentyl, Iso-Hexyl, Cyclohexyl, Cyclohexylmethyl und Cyclopentyl;
- R", R''', R'''': jeweils unabhängig voneinander unsubstituierte oder durch Halogen, Hydroxy, Cycloalkyl oder Alkyl, insbesondere durch C₁ bis C₃-Alkyl oder.C₅-C₇ Cycloalkyl, substituierte, cyclische oder lineare, verzweigte oder unverzweigte Kohlenstoffketten mit 1 bis 30 Kohlenstoffatomen, bevorzugt 1 bis 10 Kohlenstoffatomen, im Falle cyclischer Reste bevorzugt solche mit 5 bis 7 Kohicnstoffatomen, besonders bevorzugt Methyl, Ethyl, Propyl, 1-Butyl, 1-Pentyl, Hexyl, Isopropyl, Isobutyl, tert-Butyl, Neopentyl, 2-Pentyl, Iso-Pentyl, Iso-Hexyl, Cyclohexyl, Cyclohexylmethyl und Cyclopentyl
bedeuten, mit der Maßgabe dass mindestens einer der Reste R' bis R'''' nicht für Ethyl steht,

Eine bevorzugte Auswahl stellen dabei die Ammoniumsalze dar in welchen
- R: perfluorierte lineare oder verzweigte Kohlenstoffketten mit 1 bis 30 Kohlenstoffatomen, bevorzugt 4 bis 8 Kohlenstoffatomen;
- R': halogenierte oder nichthalogenierte lineare oder verzweigte Kohlenstoffketten mit 1 bis 30 Kohlenstoffatomen, bevorzugt 3 bis 10 Kohlenstoffatomen besonders bevorzugt sind Propyl, 1-Butyl, 1-Pentyl, Hexyl, Isopropyl, Isobutyl, tert-Butyl, Neopentyl, 2-Pentyl, Iso-Pentyl, Iso-Hexyl und
- R", R''', R'''': jeweils unabhängig voneinander halogenierte oder nicht halogenierte lineare oder verzweigte Kohlenstoffketten mit 1 bis 30 Kohlenstoffatomen, bevorzugt 1 bis 10 Kohlenstoffatomen, besonders bevorzugt Methyl, Ethyl, Propyl, 1-Butyl, 1-Pentyl, Hexyl, Isopropyl, Isobutyl, tert-Butyl, Neopentyl, 2-Pentyl, Iso-Pentyl, Iso-Hexyl
bedeuten, mit der Maßgabe, dass mindestens einer der Reste R' bis R'''' nicht für Ethyl steht.

Besonders bevorzugte quartäre Ammoniumsalze als Gleitmittel-Additive im Sinne der Erfindung sind:
- Perfluoroctansulfonsäuretetrapropylammoniumsalz,
- Perfluorbutansulfonsäuretetrapropylammoniumsalz.
- Perfluoroctansulfonsäuretetrabutylammoniumsalz.
- Perfluorbutansulfonsäuretetrabutylammoniumsalz,
- Perfluoroctansulfonsäuretetrapentylammoniumsalz,
- Perfluorbutansulfonsäuretetrapentylammoniumsalz,
- Perfluoroctansulfonsäuretetrahexylammoniumsalz,
- Perfluorbutansulfonsäuretetraheacylammoniumsalz,
- Perfluorbutansulfonsäuretrimethylneopentylammoniumsalz,
- Perfluoroctansulfonsäuredimethyldiisopropylammoniumsalz,
- Perfluoroctansulfonsäuretrimethylneopentylammoniumsalz,
- Perfluorbutansulfonsäuredimethyldineopentylammoniumsalz,
- Perfluoroctansulfonsäuredimethyldineopentylammoniumsalz,
- N-Methyl-tripropylammoniumperfluorbutylsulfonat,
- N-Ethyl-tripropylammoniumperfluorbutylsulfonat,
- Tetrapropylammoniumperfluorbutylsulfonat,
- Dimethyldiisopropylammoniumperfluorbutylsulfonat,
- N-Methyl-tributylammoniumperfluoroctylsulfonat
- Cyclohexyldiethylmethylammoniumperfluoroctylsulfonat,
- Cyclohexyltrimethylammoniumperfluoroctylsulfonat,

Erfindungsgemäß können ein oder mehrere der vorstehend genannten quartären Ammoniumsalze, also auch Mischungen als Gleitmittel-Additiv eingesetzt werden

Dabei wird das/die erfindungsgemäße/n Gleitmittel-Additiv/e bevorzugt aus der Gruppe Perfluoroctansulfonsäuretetrapropylammoniumsalz, Perfluoroctansulfonsäuretetrabutylammoniumsalz, Perfluoroctansulfonsäuretetrapentylammoniumsalz, Perfluoroctansulfonsäuretetrahexylammoniumsalz, Perfluoroctansulfonsäuredimethyldiisopropylammoniumsalz und Cyclohexyltrimethylammoniumperfluoroctylsulfonat, sowie den entsprechenden Perfluorbutansulfonsäuresalzen ausgewählt.

In einer ganz besonders bevorzugten Ausführungsform der Erfindung kann als Gleitmittel-Additiv das Perfluorbutansulfonsäuredimethyldiisopropylammoniumsalz verwendet werden.

Perfluoralkylsulfonsäureammoniumsalze sind bekannt oder können nach bekannten Methoden hergestellt werden. Herstellverfahren sind beispielsweise in der WO 01/85869, DE 1 966 931 oder NL 7 802 830 beschrieben.

Die Perfluoralkylsulfonsäureammoniumsalze als Gleitmittel-Additiv/e werden in Mengen von 0,001 bis 4,000 Gew.-%, bevorzugt von 0,001 bis 3,500 Gew.%, besonders bevorzugt von 0,050 bis 1,000 Gew.-%, ganz besonders bevorzugt von 0,1 bis 0,5 Gew.-% den Polycarbonaten zugesetzt. Dieser Anteil an Gleitmittel-Additiv ergänzt sich mit den Anteilen von Bariumsulfat und Polycarbonat in der Kunststoffzusammensetzung zu 100 Gew.-%.

Bariumsulfat wird in Mengen von 0,500 bis 29,999 Gew.-%, bevorzugt von 0,500 bis 14,999 Gew.-%, besonders bevorzugt von 0,500 bis 3,999 Gew.-%, ganz besonders bevorzugt von 2,0 bis 3,5 Gew.-% den Polycarbonaten zugesetzt. Dieser Anteil an Bariumsulfat ergänzt sich mit den Anteilen von Gleitmittel-Additiv und Polycarbonat in der Kunststoffzusammensetzung zu 100 Gew.-%.

Die Kunststoffzusammensetzung weist transparentes Polycarbonat in Mengen von 70,000 bis 99,499 Gew.-%, bevorzugt von 85,000 bis 99,499 Gew.-%, besonders bevorzugt von 96,000 bis 99,450 Gew.-%, ganz besonders bevorzugt von 96,0 bis 97,9 Gew.-% den Polycarbonaten zugesetzt. Dieser Anteil an Polycarbonat ergänzt sich mit den Anteilen von Gleitmittel-Additiv und Bariumsulfat in der Kunststoffzusammensetzung zu 100 Gew.-%.

Optional können erfindungsgemäß zusätzliche übliche Polymeradditive in den Kunststoffzusammensetzungen der erfindungsgemäßen Folien enthalten sein. Beispielsweise können UV-Absorber, sowie übliche Verarbeitungshilfsmittel, insbesondere Entformungsmittel und Fließmittel sowie beispielsweise für Polycarbonate bekannte Stabilisatoren insbesondere Thermostabilisatoren, Antistatika und/oder optische Aufheller enthalten sein.

In einer weiteren bevorzugten Ausführungsform der Erfindung kann die Kunststoffzusammensetzung der Polycarbonatfolie 0.01 bis 0.5 Gew.-% eines UV-Absorbers bezogen auf die Gesamtmenge der Kunststoffzusammensetzung ausgewählt aus den Klassen der Benzotriazol-Derivate, dimere Benzotriazol-Derivate, Triazin-Derivate, dimere Triazin-Derivate, Diaryl-cyanoacrylate enthalten.

Als Stabilisatoren können erfindungsgemäß beispielsweise Phosphine, Phosphite oder Si enthaltende Stabilisatoren und weitere in der EP-A 0 500 496 beschriebene Verbindungen eingesetzt werden. Beispielhaft seien als Stabilisatoren Triphenylphosphite, Diphenylalkylphosphite, Phenyldialkylphosphite, Tris-(nonylphenyl)phosphit, Tetrakis-(2,4-di-tert-butylphenyl)-4,4'-biphenylen-diphosphonit, Bis(2,4-dicumylphenyl)pentaerythritoldiphosphit und Triarylphosphit genannt. Besonders bevorzugt können Triphenylphosphin und Tris-(2,4-di-tert-butylphenyl)phosphit als Stabilisatoren verwendet werden.

Die Einarbeitung der Gleitmittel-Additive und weiterer vorgenannter Additive kann in bekannter Weise durch Vermischen von Polymergranulat mit den Zusätzen bei Temperaturen von etwa 200 bis 350°C in üblichen Aggregaten wie Innenknetern, Einschneckenextrudern und Doppelwellenextrudern beispielsweise durch Schmelzecompoundierung oder Schmelzeextrusion oder durch Vermischen der Lösungen des Polymers mit Lösungen der Additive in geeigneten organischen Lösungsmitteln wie CH₂Cl₂, Halogenalkanen, Halogenaromaten, Chlorbenzol und Xylolen und anschließende Verdampfung der Lösungsmittel in bekannter Weise erfolgen. Der Anteil der Additive in der Formmasse kann in weiten Grenzen variiert werden und richtet sich nach den gewünschten Eigenschaften der Formmasse.

Die erfindungsgemäßen Folien können durch beispielsweise durch Extrusion hergestellt werden. Darüber hinaus können sie aber auch aus Lösungen in Form von Gießfolien gegossen werden.

Die Dicke der erfindungsgemäßen Folien kann vorzugsweise 50 µm bis 1000 µm, besonders bevorzugt 70 µm bis 800 µm und ganz besonders bevorzugt 100 µm bis 700 µm betragen. Je nach Anwendungsgebiet und den jeweiligen Anforderungen können auch kleinere oder größere Dicken der Folien erzeugt werden.

Zur Herstellung der Folien durch Extrusion wird ein Polycarbonat-Granulat dem Fülltrichter eines Extruder zugeführt und gelangt über diesen in das Plastifizierungssystem des Extruders bestehend aus Schnecke und Zylinder. Im Plastifizierungssystem erfolgt das Fördern und Aufschmelzen des Granulats. Die Kunststoffschmelze wird durch eine Breitschlitzdüse gedrückt und dabei verformt, im Walzenspalt eines Glättkalanders in die gewünschte endgültige Form gebracht und durch wechselseitige Kühlung auf Glättwalzen und der Umgebungsluft formfixiert. Zwischen Plastifiziersystem und Breitschlitzdüse können eine Filtereinrichtung, eine Schmelzpumpe, stationäre Mischelemente und weitere Bauteile angeordnet sein.

Die zur Extrusion verwendeten Polycarbonate mit hoher Schmelzeviskosität werden üblicherweise bei Schmelzetemperaturen von 260 bis 320 °C verarbeitet, entsprechend werden die Zylindertemperaturen des Plastifizierzylinders sowie Düsentemperaturen eingestellt.

Erfindungsgemäß können in einer weiteren Ausführungsform die Exrudate auch aus mehreren Schichten aufgebaut sein. Beispielsweise kann erfindungsgemäß eine Folie aus mindestens einer Basisschicht und mindestens einer Coextrusionsschicht aufgebaut sein.

Durch Einsatz von einem oder mehrerer Seitenextruder und geeigneten Schmelzeadaptern vor der Breitschlitzdüse lassen sich Polycarbonatschmelzen verschiedener Zusammensetzung übereinander legen und somit beispielsweise mehrschichtige Extrudate, wie Folien oder Platten erzeugen, wie sie beispielsweise EP 0 110 221 A und EP 0 110 238 A beschrieben sind.

Sowohl die Basisschicht als auch die gegebenenfalls vorhandene(n) Coextrusionsschicht(en) der erfindungsgemäßen Folien können zusätzlich Additive wie beispielsweise, UV-Absorber sowie andere übliche Verarbeitungshilfsmittel insbesondere Entformungsmittel und Fließmittel sowie die für Polycarbonate üblichen Stabilisatoren insbesondere Thermostabilisatoren sowie Antistatika, optische Aufheller enthalten. In jeder Schicht können dabei unterschiedliche Additive bzw. Konzentrationen von Additiven vorhanden sein.

In einer bevorzugten Ausführungsform kann die mindestens eine Coextrusionsschicht eine Dicke von 10 bis 100 µm aufweisen.

Insbesondere kann die Coextrusionsschicht zusätzlich zum Gleitmittel-Additiv und dem Bariumsulfat noch UV-Absorber und Entformungsmittel enthalten.

Die folgenden Beispiele sollen die Erfindung verdeutlichen, ohne sie jedoch zu beschränken.

### Beispiele

### Folien-Extrusion:

Die verwendete Anlage für die Herstellung der Folien durch Extrusion besteht aus
- einem Hauptextruder mit einer Schnecke von 105 mm Durchmesser (D) und einer Länge von 41xD; die Schnecke weist eine Entgasungszone auf;
- einer Extrusions-Breitschlitzdüse mit 1500 mm Breite;
- einem Dreiwalzen-Glättkalander mit horizontaler Walzenanordnung, wobei die dritte Walze um +/- 45° gegenüber der Horizontalen schwenkbar ist;
- einer Rollenbahn;
- einer Einrichtung zum beidseitigen Aufbringen von Schutzfolie;
- einer Abzugseinrichtung und einer
- Aufwickelstation.

Das jeweilige Granulat wurde dem Fülltrichter des Extruders zugeführt. Im Plastifiziersystem Zylinder/Schnecke des Extruders erfolgte das Aufschmelzen und Fördern des Materials. Die Materialschmelze wurde dem Glättkalander zugeführt, dessen Walzen die in der Tabelle 1 genannte Temperatur aufwiesen. Auf dem Glättkalander (bestehend aus drei Walzen) erfolgte die endgültige Formgebung und Abkühlung der Folie. Zur Strukturierung der Folienoberflächen wurden dabei wahlweise eine Gummi-Walze (4-er Oberfläche), polierte Chrom-Walze (1-er Oberfläche) oder strukturierte Stahlwalze (2-er Oberfläche) eingesetzt, um die gewünschten Strukturierungen der Folienoberflächen zu erzeugen. Die für die Strukturierung der Folienoberfläche verwendete Gummi-Walze ist in US 4,368,240 der Fa. Nauta Roll Corporation offenbart. Anschließend wurde die Folie durch einen Abzug transportiert.

Es wurden folgende Verfahrensparameter gewählt:

**Tabelle 1:**

| | |
|---|---|
| Temperatur des Hauptextruders | 275 °C +/- 5°C |
| Temperatur des Coextruders | 260 °C +/-5°C |
| Temperatur des Umlenkkopfes | 285 °C +/-5°C |
| Temperatur der Düse | 300 °C +/-5°C |
| Drehzahl des Hauptextruders | 45 min⁻¹ |
| Drehzahl des Coextruders | 12 min⁻¹ |
| Temperatur der Gummiwalze 1 | 24 °C |
| Temperatur der Walze 2 | 72 °C |
| Temperatur der Walze 3 | 131 °C |
| Abzugsgeschwindigkeit | 21,5 m/min |

Die Herstellung der Compounds erfolgte mit herkömmlichen Zweischnecken Compoundierextrudern (z.B. ZSK 32) bei für Polycarbonat üblichen Verarbeitungstemperaturen von 250 bis 330°C.

### Beispiel 1:

### Herstellung des Weiß-(BaSO₄) Masterbatches

Es wurde ein Master-Batch mit folgender Zusammensetzung hergestellt:
Polycarbonat Makrolon 3108 550115 der Fa. Bayer MaterialScience AG mit einem Anteil von 70 Gew.-%
Bariumsulfat mit einer Teilchengröße von 2 bis 15 µm und einer mittleren Teilchengröße von 9 µm (beispielsweise Velvolux K3 der Fa. Sachtleben) mit einem Anteil von 30 Gew.-%.

### Beispiel 2:

### Herstellung des Gleitmittel-Additiv-Masterbatches

Es wurde ein Master-Batch mit folgender Zusammensetzung hergestellt:
Polycarbonat Makrolon 2600 000000 der Fa. Bayer MaterialScience AG mit einem Anteil von 98 Gew.-%
Di-isopropyl-dimethylammonium-perfluorbutansulfonat als farbloses Pulver mit einem Anteil von 2 Gew.-%.

### Vergleichsbeispiel 3

Es wurde ein Compound folgender Zusammensetzung abgemischt:
Polycarbonat Makrolon 3108 550115 der Fa. Bayer MaterialScience AG mit einem Anteil von 100 Gew.-%
Es wurden zwei Chrom-Walzen im Glättwerk eingesetzt und eine Folie in 375 µm Dicke mit beidseitig glatter (sogenannter 1-1) Oberfläche hergestellt.

### Vergleichsbeispiel 4

Es wurde ein Compound folgender Zusammensetzung abgemischt:
Polycarbonat Makrolon 3108 550115 der Fa. Bayer MaterialScience AG mit einem Anteil von 90,0 Gew.-%
Gleitmittel-Additiv-Masterbatch gemäß Beispiel 2 mit einem Anteil von 10,0 Gew.-%.

Es wurden zwei Chrom-Walzen im Glättwerk eingesetzt und eine Folie in 375 µm Dicke mit beidseitig glatter (sogenannter 1-1) Oberfläche hergestellt.

### Beispiel 5 (erfindungsgemäß):

Es wurde ein Compound folgender Zusammensetzung abgemischt:
Polycarbonat Makrolon 3108 550115 Bayer MaterialScience AG mit einem Anteil von 83,0 Gew.-%
Masterbatch gemäß Beispiel 2 mit einem Anteil von 10,0 Gew.-%
Masterbatch gemäß Beispiel 1 mit einem Anteil von 7,0 Gew.-%

Es wurde eine mattierte Stahl-Walze und eine Gummi-Walze im Glättwerk eingesetzt und eine Folie in 375 µm Dicke mit einer so genannten 4-2 Oberfläche hergestellt.

### Vergleichsbeispiel 6

Es wurde ein Compound folgender Zusammensetzung abgemischt:
Polycarbonat Makrolon 3108 550115 Bayer MaterialScience AG mit einem Anteil von 93,0 Gew.-%
Masterbatch gemäß Beispiel 1 mit einem Anteil von 7,0 Gew.-%

Es wurde eine mattierte Stahl-Walze und eine Gummi-Walze im Glättwerk eingesetzt und eine Folie in 375 µm Dicke mit einer so genannten 4-2 Oberfläche hergestellt.

### Vergleichsbeispiel 7

Es wurde ein Compound folgender Zusammensetzung abgemischt:
Polycarbonat Makrolon 3108 550115 Bayer MaterialScience AG mit einem Anteil von 100,0 Gew.-%

Es wurde eine mattierte Stahl-Walze und eine Gummi-Walze im Glättwerk eingesetzt und eine Folie in 375 µm Dicke mit einer 4-2 Oberfläche hergestellt.

### Rauhigkeitsmessungen

Die Rauhigkeit wurde gemäß der Norm ISO 4288 bestimmt.

| | Oberflächen | Rauhigkeit (1er bzw. 4-er Seite) | Rauhigkeit (1er bzw. 2-er Seite) |
|---|---|---|---|
| Beispiel 3 | 1-1 | < 1 µm | < 1 µm |
| Beispiel 4 | 1-1 | <1 µm | < 1 µm |
| Beispiel 5 (erfindungsgemäß) | 4-2 | 6,7 µm (4-er) | 6,0 µm (2-er) |
| Beispiel 6 | 4-2 | 8,1 µm (4-er) | 7,8 µm (2-er) |
| Beispiel 7 | 4-2 | 5,9 µm (4-er) | 5,06 µm (2-er) |

### Glanzgradmessungen

Der Glanzgrad wurde gemäß der Norm EN ISO 2813 (Winkel 60°) bestimmt.

| | Oberflächen | Glanzgrad (1-er bzw. 4-er Seite) | Glanzgrad (1-er bzw. 2-er Seite) |
|---|---|---|---|
| Beispiel 3 | 1-1 | > 90 | > 90 |
| Beispiel 4 | 1-1 | > 90 | > 90 |
| Beispiel 5 (erfindungsgemäß) | 4-2 | 6,1 - 6,7 (4-er) | 93,1 (2-er) |
| Beispiel 6 | 4-2 | 3,5 - 5,3 (4-er) | 85,2 - 87,4 (2-er) |
| Beispiel 7 | 4-2 | 7,0 - 8,3 (4-er) | 10,3 - 18,1 (2-er) |

### Bestimmung der Reibungskoeffizienten:

Der Gleitreibungskoeffizient wurde gemäß der Norm ASTM D 1894-06 bestimmt. Es wurden die Folienseiten miteinander gerieben, die vergleichbare Rauhigkeitswerte aufwiesen.

| Bedingungen: | |
|---|---|
| Mess-Temperatur: | 23°C |
| Reibklotz | 50 mm |
| Masse (Reibklotz) | 202,2g |
| Gleitgeschwindigkeit | 100 mm/min |
| Probekörper: | Breite: 60 mm |
| | Länge 200 mm |

| Kombination der aufeinander geriebenen Seiten | | Gleitreibungszahl |
|---|---|---|
| Folie aus Beispiel 3/1-er Seite | Folie aus Beispiel 3/1-er Seite | >2,52* |
| Folie aus Beispiel 4/1-er Seite | Folie aus Beispiel 4/1-er Seite | 0,3 |
| Folie aus Beispiel 5/2-er Seite | Folie aus Beispiel 5/2-er Seite | 0,21 |
| Folie aus Beispiel 6/2-er Seite | Folie aus Beispiel 6/2-er Seite | 1,51 |
| Folie aus Beispiel 7/2-er Seite | Folie aus Beispiel 7/2-er Seite | 0,23 |
| Folie aus Beispiel 5/4-er Seite | Folie aus Beispiel 5/4-er Seite | 0,12 |
| Folie aus Beispiel 6/4-er Seite | Folie aus Beispiel 6/4-er Seite | 0,25 |
| Folie aus Beispiel 7/4-er Seite | Folie aus Beispiel 7/4-er Seite | 0,29 |

| | | |
|---|---|---|
| *Außerhalb des maximalen Messbereichs | | |

Es wurde festgestellt, dass die Folien, die aus einer erfindungsgemäße Kunststoffzusammensetzung aus Polycarbonat, Di-isopropyl-dimethylammonium-perfluorbutansulfonat und Bariumsulfat (Beispiel 5) hergestellt wurden, sehr gute Glanzwerte und die besten Gleitreibungskoeffizienten aufweisen.

Die erfindungsgemäßen Folien zeigen darüber hinaus auch überraschend gute Eigenschaften in der Weiterverarbeitung, beispielsweise in der Herstellung von Formteilen mit Folien aus gleichen oder verschiedenartigen Kunststoffzusammensetzungen oder der Herstellung von Verbundkörpern mit anderen Materialien. Werden die erfindungsgemäßen Folien verformt und zu Formteilen gefertigt, müssen diese oft von überstehendem Material getrennt werden. Dieser Vorgang wird auch als "Trimming" bezeichnet. Schneidversuche zum Randbeschnitt haben gezeigt, dass der Folienrand bei den erfindungsgemäßen Folien hierbei deutlich glatter und gleichmäßiger ist, als bei Folien des Stands der Technik. Solche Formteile oder Verbundkörper, die ein oder mehrere erfindungsgemäße Folien enthalten oder aus erfindungsgemäßen Folien bestehen, wie beispielsweise Platten, sind erfindungsgemäß ebenfalls umfasst.

## Patentansprüche

1. Folie bestehend aus einer Kunststoffzusammensetzung enthaltend 70 bis 99,499 Gew.-% eines transparenten Polycarbonats und 0,001 bis 4 Gew.-% quartäre Ammoniumsalze von Perfluoralkylsulfonsäuren als Gleitmittel-Additiv und 0,5 bis 29.999 Gew.-%, Bariumsulfat, wobei sich die genannten Bestandteile jeweils zu 100 Gew.-% ergänzen.

2. Folie nach Anspruch 1 **dadurch gekennzeichnet, dass** als Gleitmittel-Additiv ein oder mehrere quartäre Ammoniumsalze einer Perfluoralkylsulfonsäure der Formel (I)
R-S0₃ NR' R" R''' R'''' (I)
eingesetzt werden, in welcher
R perfluorierte cyclische oder lineare, verzweigte oder unverzweigte Kohlenstoffketten mit 1 bis 30 Kohlenstoffatomen;
R' unsubstituierte oder durch Halogen, Hydroxy, Cycloalkyl oder Alkyl substituierte, cyclische oder lineare, verzweigte oder unverzweigte Kohlenstoffketten mit 1 bis 30 Kohlenstoffatomen,
R", R''', R'''' jeweils unabhängig voneinander unsubstituierte oder durch Halogen, Hydroxy, Cycloalkyl oder Alkyl, substituierte, cyclische oder lineare, verzweigte oder unverzweigte Kohlenstoffketten mit 1 bis 30 Kohlenstoffatomen,
bedeuten, mit der Maßgabe, dass mindestens einer der Reste R' bis R'''' nicht für Ethyl steht.

3. Folien nach Anspruch 1 **dadurch gekennzeichnet, dass** das Gleitmittel-Additiv ein oder mehrere quartäre Ammoniumsalze ausgewählt aus der Gruppe
- Perfluoroctansulfonsäuretetrapropylammoniumsalz,
- Perfluorbutansulfonsäuretetrapropylammoniumsalz.
- Perfluoroctansulfonsäuretetrabutylammoniumsalz.
- Perfluorbutansulfonsäuretetrabutylammoniumsalz,
- Perfluoroctansulfonsäuretetrapentylammoniumsalz,
- Perfluorbutansulfonsäuretetrapentylammoniumsalz,
- Perfluoroctansulfonsäuretetrahexylammoniumsalz,
- Perfluorbutansulfonsäuretetrahexylammoniumsalz,
- Perfluorbutansulfonsäuretrimethylneopentylammoniumsalz,
- Perfluoroctansulfonsäuredimethyldiisopropylammoniumsalz,
- Perfluoroctansulfonsäuretrimethylneopentylammoniumsalz,
- Perfluorbutansulfonsäuredimethyldineopentylammoniumsalz,
- Perfluoroctansulfonsäuredimethyldineopentylammoniumsalz,
- N-Methyl-tripropylammoniumperfluorbutylsulfonat,
- N-Ethyl-tripropylammoniumperfluorbutylsulfonat,
- Tetrapropylammoniumperfluorbutylsulfonat,
- Dimethyldiisopropylammoniumperfluorbutylsulfonat,
- N-Methyl-tributylammoniumperfluoroctylsulfonat
- Cyclohexyldiethylmethylammoniumperfluoroctylsulfonat und Cyclohexyltrimethylammoniumperfluoroctylsulfonat ist.

4. Folie nach Anspruch 1 **dadurch gekennzeichnet, dass** das Gleitmittel-Additiv Di-isopropyl-dimethylammoniumperfluorbutylsulfonat ist.

5. Folie nach Anspruch 1 **dadurch gekennzeichnet, dass** sie eine Dicke von 50 µm bis 1000 µm aufweist.

6. Folie nach Anspruch 1 **dadurch gekennzeichnet, dass** sie mindestens eine Coextrusionsschicht aufweist.

7. Folien nach Anspruch 6 **dadurch gekennzeichnet, dass** die Coextrusionsschicht eine Dicke von 10 bis 100 µm aufweist.

8. Formteil enthaltend eine oder mehrere Folien nach einem der Ansprüche 1 bis 7.
